# FASCICULE DE BREVET EUROPEEN

(11) **EP 2 666 723 B1**
(45) Date de publication et mention de la délivrance du brevet: **26.06.2019**
(21) Numéro de dépôt: 13169209.7
(22) Date de dépôt: 24.05.2013
(51) Int. Cl.: B64G 1/26, F02K 9/84, B64G 1/24, B64G 1/28, B64G 1/36

(54) **Système de propulsion pour contrôle d'orbite et contrôle d'attitude de satellite**
Antriebssystem für die Kontrolle der Umlaufbahn und der Lage von Satelliten
Propulsion system for satellite attitude control and orbit control

(30) Priorité: 25.05.2012 FR 1201504
(43) Date de publication de la demande: 27.11.2013
(73) Titulaire: Thales, 92400 Courbevoie (FR)
(72) Inventeur: Celerier, Bruno, 06810 AURIBEAU SUR SIAGNE (FR)
(74) Mandataire: Collet, Alain

(56) Documents cités:
- EP-A2- 0 937 644
- US-B1- 6 565 043

## Description

La présente invention concerne le domaine des systèmes de contrôle d'orbite et le contrôle d'attitude de satellite, et plus particulièrement l'architecture des systèmes de propulsion embarqués pour le contrôle d'orbite de satellites géostationnaires de télécommunications.

Pour permettre l'utilisation des divers instruments de mission d'un satellite, tels que des systèmes de télécommunications, il convient de pouvoir contrôler la position et l'orientation du satellite en orbite. En plus de l'attraction gravitationnelle de la terre, un satellite subit plusieurs forces de plus faibles ampleurs qui perturbent progressivement sa position et son orientation. L'attraction gravitationnelle du soleil et de la lune, la déformation de la terre au niveau de l'équateur, ou encore la pression radiative solaire génèrent des dérives qu'il convient de corriger. Des systèmes de contrôle sont mis en oeuvre pour maintenir d'une part l'orientation du satellite par rapport à la terre, c'est le contrôle d'attitude, et d'autre part sa position en orbite par rapport à une position idéale souhaitée, c'est le contrôle d'orbite.

Par exemple dans le cas des satellites géostationnaires, le contrôle d'orbite cherche à limiter l'inclinaison par rapport au plan équatorial, à limiter l'excentricité de l'orbite, et à limiter la dérive de la position longitudinale du satellite par rapport à la terre. Pour cela, des propulseurs sont positionnés en divers emplacements sur le satellite pour corriger la trajectoire à intervalle plus ou moins proche en appliquant une force sur le satellite. Ces opérations de maintien à poste nécessitent de pouvoir disposer d'une réserve de carburant suffisante tout au long de la vie du satellite. Pour limiter le coût et la masse des dispositifs de contrôle d'orbite, une nouvelle architecture des sytèmes de propulsion est envisagée.

Un satellite est mis en orbite par la combinaison d'un véhicule spatial lanceur et de ses propres systèmes de propulsion. Le lanceur transporte et libére le satellite sur une première orbite terrestre dite de transfert, dont le perigée est généralement bas ; une fois sur cette première orbite, un système de propulsion du satellite prend le relais pour transporter le satellite jusqu'à son orbite finale. Généralement, ce transfert est réalisé au moyen d'un propulseur satellite principal PSP consommant un carburant chimique de type ergol ou propergol, délivrant une poussée de forte puissance permettant d'atteindre rapidement l'orbite finale.

Une fois mis en station, plusieurs propulseurs secondaires de plus faibles puissances assurent le maintien en position du satellite sur l'orbite. Pour cela, des propulseurs chimiques à ergol ou des propulseurs électriques peuvent être utilisés. Dans un propulseur électrique, de type propulseur à plasma, ou propulseur à ions, des atomes de xénon sont ionisés par collision avec des électrons, créant des ions xénons. La poussée est générée lorsque les ions xénons chargés sont accélérés hors du propulseur par un champ électromagnétique. Bien que coûteux et de masse initiale importante, l'efficacité du propulseur, ou sa capacité à générer de la force par éjection de masse, aussi appelée impulsion spécifique, est sensiblement plus importante que celle des propulseurs chimiques.

Dans les systèmes connus, des propulseurs chimiques et des propulseurs électriques sont positionnés en plusieurs emplacements sur la structure du satellite pour répondre à l'ensemble des besoins de la mission, du transport de l'orbite de transfert au maintien en orbite tout au long de la vie du satellite. Les systèmes de propulsion ainsi mis en oeuvre ont pour inconvénient un coût élevé et une masse élevée, des différents propulseurs et du carburant. Ces inconvénients limitent la capacité d'embarquement de charge utile du satellite.

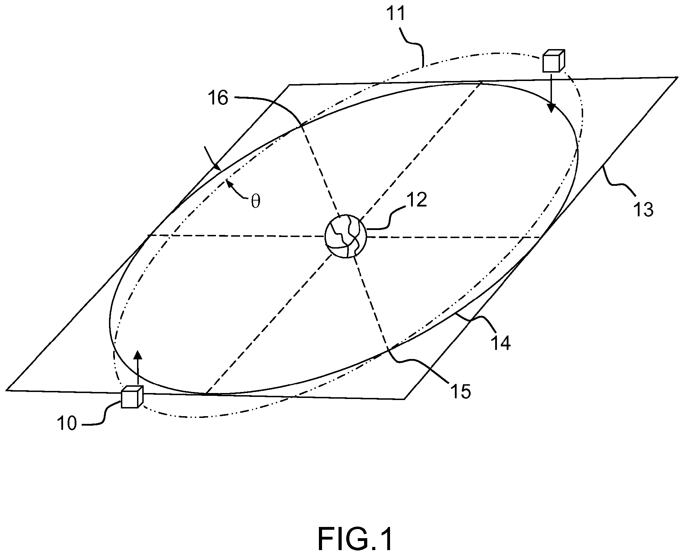

Selon l'état connu de la technique, un système de contrôle d'orbite cherche à piloter la position du satellite au travers de six paramètres orbitaux. La figure 1 représente un satellite géostationnaire 10 en orbite 11 autour de la terre 12. L'orbite 11 est inclinée d'un angle θ par rapport au plan équatorial 13 qui contient l'orbite géostationnaire idéale 14. L'orbite 11 du satellite coupe le plan équatorial 13 en deux points 15 et 16, couramment appelés noeuds orbitaux. On connaît aussi les six paramètres orbitaux utilisés pour qualifier la position d'un satellite : le demi grand-axe, l'excentricité, l'inclinaison, l'argument du noeud ascendant, l'argument du perigee, et l'anomalie vraie. Le contrôle d'orbite consiste à quantifier ces paramètres orbitaux et à réaliser les opérations nécessaires au moyen des systèmes de propulsion embarqués, pour maintenir le satellite dans une zone prédéfinie autour d'une position idéale. A titre d'exemple, pour un satellite géostationnaire, une fenêtre de dérive de plus ou moins 0,1°, représentant une largeur de presque 150km, est attribuée autour d'une position cible.

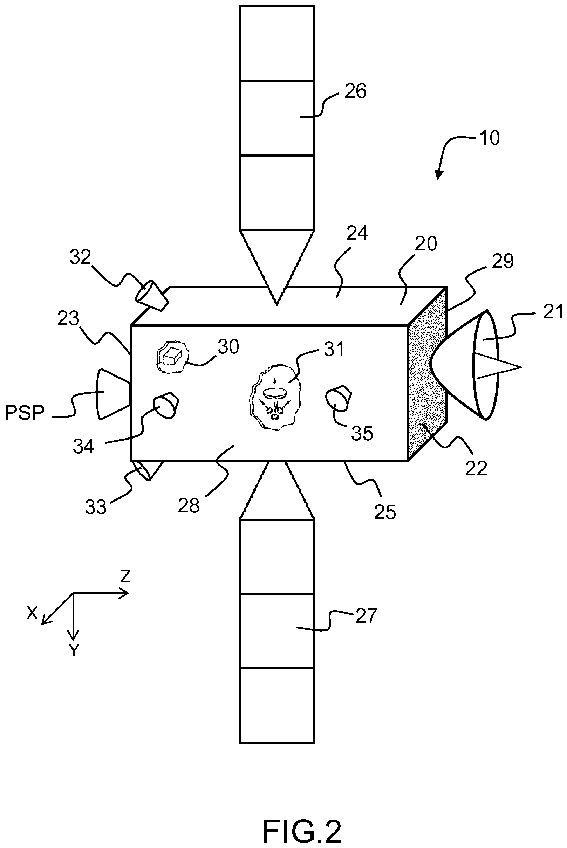

Une architecture courante d'un satellite 10, telle que représentée sur la figure 2, comprend une structure parallélépipédique 20 sur laquelle sont fixés divers dispositifs utiles au pilotage du satellite 10 et à sa mission. Des instruments de télécommunications 21 sont installés sur une face 22 dont l'orientation est maintenue en direction de la terre, communément appelée face terre. Sur une face opposée 23, communément appelée face anti-terre est positionné le propulseur satellite principal PSP qui assure notamment la poussée nécessaire au transfert de l'orbite basse vers l'orbite finale. Sur deux faces latérales opposées 24 et 25, communément appelées face Nord et face Sud, en raison de leur orientation par rapport au plan équatorial, sont positionnés deux jeux de panneaux solaires 26 et 27 permettant l'alimentation en énergie électrique des systèmes embarqués. Divers dispositifs peuvent être embarqués sur les faces latérales 28 et 29, communément appelés face Est et Ouest pour leur orientation par rapport à une longitude terrestre. Le maintien d'une orientation constante du satellite par rapport à la terre est nécessaire au bon déroulement de la mission du satellite, par exemple pour l'orientation des panneaux solaires 26 et 27 ou le pointage des systèmes de telecommunications 21 vers la terre. Cela est réalisé au moyen d'un système de contrôle d'attitude. On connaît plusieurs systèmes de contrôle d'attitude aptes à détecter et corriger les erreurs d'orientation. Ainsi, la mesure de l'orientation du satellite peut être réalisée au moyen d'un ensemble de capteur, comprenant par exemple un capteur dirigé vers la terre, positionné en face terre pour une mesure sur deux axes, tangage et roulis, par rapport à la terre et un ensemble 30 de gyroscopes pour une détection des vitesses de rotation sur trois axes. A partir de ces mesures, des corrections d'orientation du satellite autour de son centre de gravité peuvent être réalisées, par exemple au moyen d'un ensemble de roues à inertie 31 ou d'actionneurs gyroscopiques.

Un satellite équipé d'un tel système permettant le contrôle d'attitude est dit stabilisé sur trois axes. Typiquement, en contrôlant la vitesse de rotation et l'orientation des roues à inertie, on sait corriger une erreur d'orientation dans un trièdre de référence lié au satellite. Dans la suite, on appelle Z un axe dirigé vers la terre, aussi appelé axe de lacet, Y un axe perpendiculaire à l'orbite et orienté dans le sens opposé au moment cinétique de l'orbite (vers le sud pour un geostationnaire), aussi appelé axe de tangage, et X un axe formant avec Y et Z un repère orthogonal direct, aussi appelé axe de roulis qui se trouve orienté selon la vitesse dans le cas des orbites circulaires.

Pour le contrôle d'orbite, plusieurs propulseurs sont disposés sur la structure 20 du satellite 10. Un premier propulseur de forte puissance PSP, permettant d'assurer le transfert entre l'orbite terrestre initiale (après libération du lanceur) et l'orbite finale, est positionné sur la face anti-terre 23. Selon un état connu de la technique, un premier ensemble de propulseurs, comprenant par exemple deux propulseurs 32 et 33 positionnés en face Nord et en face Sud à proximité de la face anti-terre, est utilisé pour contrôler l'inclinaison. Un second ensemble de propulseurs, comme par exemple les propulseurs 34 et 35, positionné en faces Est et Ouest, est utilisé pour le contrôle de l'excentricité et la dérive. On sait aussi que le contrôle de l'inclinaison requiert de l'ordre de cinq à dix fois plus de carburant que le contrôle de l'excentricité et de la dérive. Pour cette raison, le contrôle en inclinaison est en général réalisé au moyen de propulseur à plasma, plus faiblement consommateur de carburant, tandis que les propulseurs dédiés au contrôle de l'excentricité et de la dérive sont le plus souvent à ergol chimique.

A titre d'exemple, un satellite courant de masse sèche 2500kg et permettant d'embarquer une charge utile de 900 kg, comprend un propulseur principal, deux propulseurs à plasma pour l'inclinaison et l'excentricité, et quatre propulseurs à ergol pour l'excentricité et la dérive. Typiquement, 1700kg d'ergol sont nécessaires pour le transfert initial d'orbite, et 220kg de Xenon sont nécessaires pour assurer le contrôle d'orbite du satellite pendant une durée de mission d'environ 15 ans. Ainsi, le coût et la masse des systèmes de propulsion actuels limitent la capacité à embarquer une charge utile élevée. Notons aussi que dans la plupart des systèmes connus de propulsion pour contrôle d'orbite, les différents propulseurs embarqués comprennent en réalité deux moteurs propulsifs positionnés côte à côte, pour des raisons de sécurité et de fiabilité de la mission. Cette redondance, bien connue de l'homme du métier, n'est pas représentée sur les figures mais on considère dans la suite qu'un propulseur peut être constitué d'un ou plusieurs moteurs propulsifs formant un ensemble propulsif, et dont la poussée qui peut être délivrée est identique, en orientation ou en intensité.

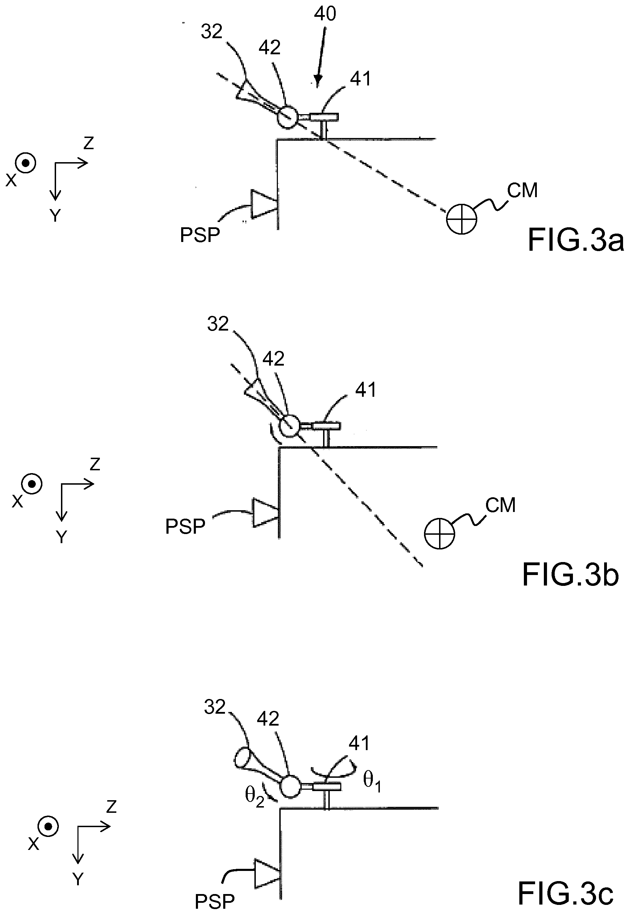

Les figures 3a, 3b et 3c illustrent le principe du contrôle d'orbite pour un satellite selon l'état connu de la technique. La structure 20 du satellite 10 est représentée en vue de coté, la face Est étant visible. Le propulseur 32 est relié à la face Nord de la structure 20 au moyen d'un mécanisme deux axes 40. Le mécanisme deux axes 40 permet la rotation du propulseur 32 par rapport à la structure 20 selon un premier axe parallèle à l'axe Y et un second axe parallèle à l'axe X. Sur les figures 3a à 3c, le mécanisme deux axes 40 est une liaison cardan réalisée au moyen d'une première liaison pivot 41 d'axe parallèle à l'axe Y et une seconde laison pivot 42 d'axe parallèle à l'axe X. Le centre de masse du satellite, situé à l'intérieur de la structure parallélépipédique 20, est référencé CM.

Sur la figure 3a, l'orientation du propulseur 32 permet de diriger la poussée du propulseur vers le centre de masse CM du satellite. Pour effectuer une manoeuvre de correction d'inclinaison, une technique connue de l'homme du métier consiste à allumer le propulseur 32 une première fois à proximité d'un noeud orbital, par exemple 15, puis le propulseur du côté opposé une seconde fois à proximité du noeud orbital opposé, 16 dans l'exemple. Ainsi, la poussée du premier allumage du propulseur 32, orientée vers le centre de masse CM, déplace le satellite dans une direction ayant une composante en Z et une composante en Y. Douze heures après, la poussée du second allumage au noeud orbital opposé, déplace le satellite dans une direction ayant une composante en Z opposée au premier allumage, et qui vient en compenser l'effet non recherché sur l'excentricité et une composante également opposée en Y mais dont les effets recherchés en inclinaison se cumulent. Ainsi, deux allumages d'intensités égales réalisés à douze heures d'intervalle à proximité des noeuds orbitaux 15 et 16 permettent d'annuler l'effet de la composante radiale pour ne conserver qu'une correction Nord-Sud. Cette procédure connue permet une correction quotidienne de l'inclinaison.

Par cette même technique il est aussi possible, en appliquant une seconde poussée d'intensité différente de la première, d'appliquer des corrections d'excentricité selon un axe perpendiculaire à la ligne joignant les deux noeuds orbitaux 15 et 16. Des techniques ont aussi développées pour permettre des corrections d'excentricité selon un second axe, en décalant l'allumage du propulseur par rapport au noeud orbital, mais au prix d'une moins bonne efficacité du contrôle de l'inclinaison. En résumé, les systèmes connus permettent au moyen de deux systèmes de propulseur 32 et 33 d'assurer le contrôle de l'inclinaison et le contrôle de l'excentricité selon un axe sans désoptimisation du contrôle d'inclinaison, ou d'assurer le contrôle de l'inclinaison et le contrôle de l'excentricité selon deux axes avec désoptimisation du contrôle d'inclinaison. Le contrôle de la dérive ne peut être réalisé par ces deux propulseurs. Un satellite courant comprend pour cela quatre tuyères à ergol chimique positionnées sur les faces Est et Ouest du satellite.

Les systèmes de propulseur 32 et 33 sont également utiles pour gérer la quantité de mouvement des systèmes de contrôle d'attitude, comme illustré sur les figures 3b et 3c. En appliquant une poussée hors du centre de masse CM - dans un plan Y-Z sur la figure 3b et hors du plan Y-Z sur la figure 3c, on génère un couple de rotation sur le satellite - un couple de roulis sur la figure 3b et un couple de tangage et lacet sur la figure 3c. Ces deux couples peuvent être utilisés pour charger ou décharger les roues à inertie selon deux axes. Par exemple, lorsque la vitesse de rotation d'une roue à inertie atteint sa vitesse limite, on cherchera à orienter la poussée volontairement hors du centre de masse CM de façon a générer, en plus du déplacement souhaité du satellite, un couple permettant de désaturer la roue à inertie, ou plus généralement, le problème sera anticipé en ramenant le moment cinétique à des valeurs voulues à l'occasion de chaque maneuvre.

Ces valeurs voulues pouvant bien entendu être nulles, mais aussi une valeur définie judicieusement de manière à anticiper l'évolution du moment cinétique entre deux maneuvres sous l'effet de la pression de radiation solaire notamment.

Notons aussi que le centre de masse du satellite varie au cours de la vie du satellite, notamment en raison de la consommation progressive du carburant embarqué. Dans les systèmes connus, des algorithmes sont mis en oeuvre pour la gestion combinée du contrôle d'attitude et du contrôle d'orbite, et pour permettre de prendre en compte la position du centre de masse CM tout au long de la vie du satellite.

On comprend donc l'enjeu de pouvoir disposer de systèmes de propulsion efficaces. Les solutions actuelles, qui mettent en oeuvre des propulseurs de nature différentes en divers emplacements du satellite sont relativement complexes, honéreuses et présentent une masse élevée qui limite la capacité d'embarquement du satellite. On connait en particulier les solutions décrites dans les documents de brevet référencées US6,565,043 et EP0937644. Ces solutions restent néanmoins complexes et nécessitent de disposer de nombreux propulseurs sur le satellite.

L'invention vise à proposer une solution alternative pour le contrôle de l'orbite et la réalisation des couples à exercer sur la satellite pendant les maneuvres en palliant les difficultés de mise en oeuvre citées ci-dessus.

A cet effet, l'invention a pour objet un système de propulsion selon l'une des revendications 1 et 2.

L'invention porte également sur un satellite à orbite terrestre muni d'un système de propulsion selon l'une des revendications 1 et 2, caractérisé en ce qu'il comprend une structure parallélépipédique, et en ce que le propulseur et le mécanisme motorisé sont maintenus, dans une configuration de stockage, contre une des faces de la structure du satellite ; le propulseur et le mécanisme motorisé étant libérés puis réorientés dans une configuration opérationnelle.

L'invention porte enfin sur un satellite à orbite terrestre muni d'un système de propulsion selon l'une des revendications 1 et 2, caractérisé en ce que le système de propulsion est, dans une une configuration adaptée au transfert d'orbite, positionné et orienté de manière à ce que la force délivrée par le propulseur génère une poussée sur le satellite selon une direction voulue et un couple maitrisé ; la génération de couple ayant pour but d'aider au contrôle d'attitude du satellite ou à la maitrise du moment cinétique du satellite.

L'invention sera mieux comprise et d'autres avantages apparaîtront à la lecture de la description détaillée des modes de réalisation donnés à titre d'exemple sur les figures suivantes.
La figure 1, déjà présentée, représente un satellite géostationnaire en orbite autour de la terre,
la figure 2, déjà présentée, représente une architecture courante d'un satellite comprenant une structure sur laquelle sont fixés divers dispositifs utiles au pilotage du satellite et à sa mission,
les figures 3a, 3b et 3c, déjà présentées, illustrent le principe du contrôle d'orbite pour un satellite selon l'état connu de la technique,
les figures 4a, 4b et 4c représentent trois variantes d'un système de propulsion selon l'invention,
les figures 5a et 5b représentent un système de propulsion en configuration de stockage selon deux modes de réalisation de l'invention,
la figure 6 représente un système de propulsion dans une configuration adaptée au transfert d'orbite,
la figure 7 représente dans une vue en perspective un satellite muni de systèmes de propulsion dans une mise en oeuvre privilégiée de l'invention.

Par souci de clarté, les mêmes éléments porteront les mêmes repères dans les différentes figures.

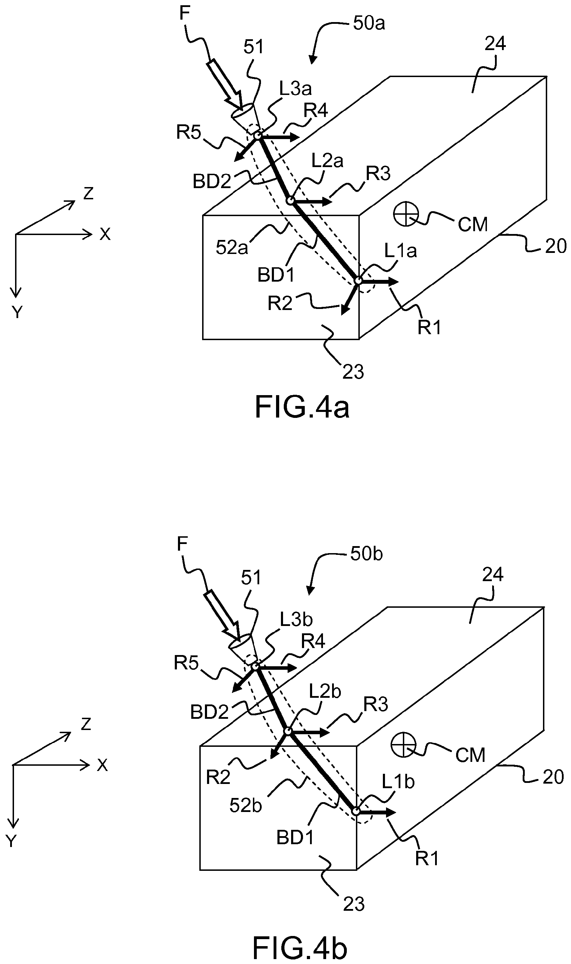

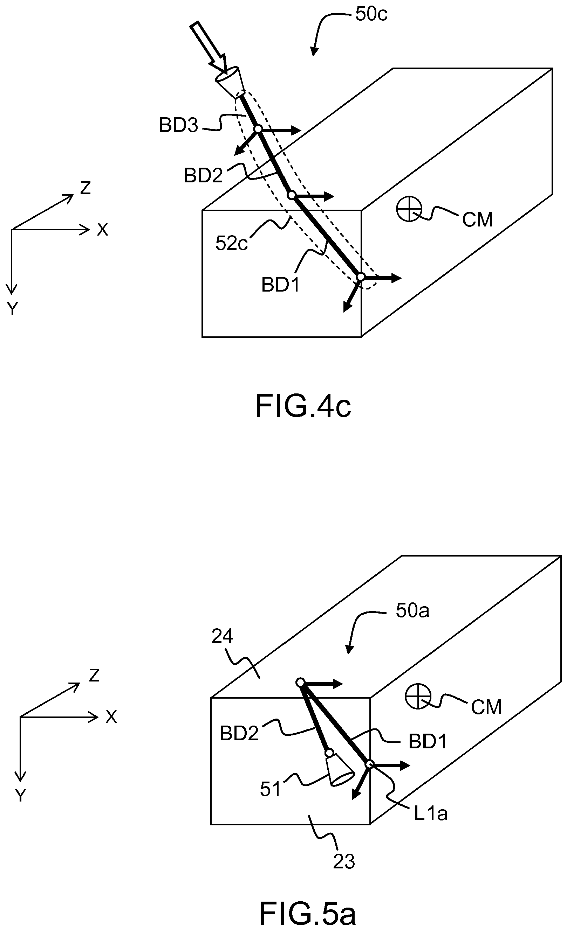

Les figures 4a, 4b et 4c représentent trois variantes d'un système de propulsion selon l'invention. Comme précédemment décrit, un satellite 10 en orbite 11 est stabilisé sur trois axes d'un trièdre de référence lié au satellite au moyen d'un système de contrôle d'attitude. Le trièdre de référence comprend un axe Z orienté vers la terre, un axe Y perpendiculaire à l'obite et orienté dans le sens opposé au moment cinétique de la rotation orbitale, et un axe X formant avec les axes Y et Z un repère orthogonal direct. L'axe X se trouve orienté dans la direction de la vitesse du satellite en orbite 11 autour de la terre 12. Le satellite 10 comprend une structure parallélépipédique 20 dont deux faces 22 et 23, dites face terre et face anti-terre, sont perpendiculaires à l'axe Z et orientées respectivement vers la terre et vers une direction opposée à la terre, et deux faces adjacentes opposées 24 et 25, dite face nord et face sud, sont perpendiculaires à l'axe Y et orientées respectivement vers le nord et le sud dans le champ magnétique terrestre. On note aussi un centre de masse CM du satellite, dont la position varie légèrement au cours de la vie du satellite, situé à l'intérieur de la structure 20.

Pour des raisons de clarté, la description de l'invention s'appuie sur le repère formé par les axes X, Y et Z et sur un satellite dont la structure 20 est parallélépipédique. L'invention ne se limite en aucune manière à un satellite dont la structure 20 est parallélépipédique, ni à un satellite stabilisé sur les trois axes X, Y et Z. Elle s'étend d'une manière générale à tout satellite 10 à orbite terrestre 11 disposant d'une capacité d'accumulation de moment cinétique, animé d'une vitesse de déplacement tangentielle à l'orbite terrestre 11. Dans la suite, l'axe de la vitesse est référencé axe V.

Dans une première variante de l'invention, telle que décrite par la figure **4a**, un système de propulsion 50a comprend un propulseur 51 apte à délivrer une force selon un axe F ayant une composante perpendiculaire à l'orbite 11, c'est-à-dire selon l'axe Y sur la figure, et un mécanisme motorisé 52a relié d'une part au propulseur 51 et d'autre part à une structure 20 du satellite 10.

Avantageusement, le mécanisme motorisé (52a) comprend plusieurs composants reliés entre eux, et positionnés en série entre la structure 20 du satellite 10 et le propulseur 51 dans l'ordre suivant :
- une première liaison motorisée L1a, permettant une rotation autour d'un axe R1 sensiblement parallèle à l'axe V, et une rotation autour d'un axe R2 sensiblement perpendiculaire à la fois à l'axe V et à l'axe F,
- un premier bras de déport rigide BD1,
- un seconde liaison motorisée L2a, permettant une rotation autour d'un axe R3 sensiblement parallèle à l'axe V,
- un second bras de déport BD2,
- une troisième liaison motorisée L3a, permettant une rotation autour d'un axe R4 sensiblement parallèle à l'axe V, et une rotation autour d'un axe R5 sensiblement perpendiculaire à l'axe F et à l'axe V.

Dans une seconde variante de l'invention, telle que décrite par la figure **4b**, un système de propulsion 50b comprend un propulseur 51 apte à délivrer une force selon un axe F ayant une composante perpendiculaire à l'orbite 11, c'est-à-dire selon l'axe Y sur la figure, et un mécanisme motorisé 52b relié d'une part au propulseur 51 et d'autre part à une structure 20 du satellite 10.

Avantageusement, le mécanisme motorisé 52b comprend plusieurs composants reliés entre eux, et positionnés en série entre la structure 20 du satellite 10 et le propulseur 51 dans l'ordre suivant :
- une première liaison motorisée L1b, permettant une rotation autour d'un axe R1 sensiblement parallèle à l'axe V,
- un premier bras de déport rigide BD1,
- un seconde liaison motorisée L2b, permettant une rotation autour d'un axe R3 sensiblement parallèle à l'axe V, et une rotation autour d'un axe R2 sensiblement perpendiculaire à la fois à l'axe V et à l'axe F,
- un second bras de déport rigide BD2,
- une troisième liaison motorisée L3b, permettant une rotation autour d'un axe R4 sensiblement parallèle à l'axe V, et une rotation autour d'un axe R5 sensiblement perpendiculaire à l'axe F et à l'axe V.

Dans une troisième variante de l'invention, telle que décrite par la figure **4c**, un système de propulsion 50c comprend un propulseur 51 et un mécanisme motorisé 52c. Avantageusement, le mécanisme 52c comprend les mêmes composants que le mécanisme motorisé 52a ou 52b, décrits respectivement sur les figures 4a et 4b, et comprend en outre un troisième bras de déport BD3 reliant la troisième liaison motorisée, L3a ou L3b, et la structure 20 du satellite 10. Autrement dit, la troisième liaison motorisée, L3a ou L3b est reliée au propulseur 51 par l'intermédiaire d'un troisième bras de déport rigide BD3.

Pour ces variantes de l'invention, divers mécanismes peuvent être mis en oeuvre pour la réalisation des liaisons motorisés L1a, L1b, L2a, L2b, L3a ou L3b. Une liste non exhaustive comprend en particulier des liaisons à cardan motorisé, ou mécanisme deux axes, des liaisons pivot motorisé. Les bras de déport BD1, BD2 et BD3 peuvent être de forme sensiblement longiligne comme représentée sur les figures 4a à 4c, ou peuvent comprendre une succession de plusieurs tiges sensiblement longilignes reliées entre elles par des coudes. Comme mentionné précédemment, un propulseur 51 peut aussi comprendre deux moteurs propulsifs pour des raisons de sécurité et de fiabilité.

Dans une phase opérationnelle du satellite, le satellite 10 étant en orbite 11 autour de la terre 12, le propulseur 51 relié au mécanisme motorisé 52a, 52b ou 52c, selon l'une quelconque des trois variantes de l'invention, peut être déplacé et orienté au moyen des liaisons motorisées. En particulier, Il est possible de positionner le propulseur 51 dans un plan perpendiculaire à l'axe X contenant le centre de masse CM, et d'orienter sa poussée vers le centre de masse CM. Dans cette configuration, le système de propulsion est fonctionnellement équivalent aux systèmes connus décrits par les figures 3a, 3b et 3c dans un cas parfait de connaissance du centre de masse et d'alignements ; en appliquant une poussée à proximité des noeuds orbitaux 15 et 16, il permet le contrôle de l'inclinaison et de l'excentricité selon un axe sans désoptimisation du contrôle d'inclinaison, ou le contrôle de l'inclinaison et de l'excentricité selon deux axes avec désoptimisation du contrôle d'inclinaison. Le mécanisme motorisé 52, 52b, 52c ou 52d permet aussi de positionner le propulseur 51 en dehors d'un plan perpendiculaire à l'axe X contenant le centre de masse CM, et d'orienter sa poussée vers le centre de masse CM. Dans cette configuration, le système de propulsion 50 permet d'appliquer une poussée sur le centre de masse CM ayant une composante désirée en X, c'est à dire selon la vitesse, en plus de composante en Y et/ou en Z. Cette caractéristique est particulièrement avantageuse car elle permet d'apporter au système de propulsion 50 la capacité de contrôle de l'orbite en dérive et excentricité, ou autrement dit la capacité de corriger la position du satellite selon l'axe X, vers l'est ou vers l'ouest. De même, selon des techniques connus de l'homme du métier, le système de propulsion permet, en orientant la force du propulseur selon un axe ne passant pas par le centre de masse CM, de générer un couple pour le contrôle du moment cinétique du satellite.

Une autre caractéristique particulièrement attractive du système de propulsion 51 est qu'il permet de déplacer le propulseur 51 de part et d'autre du plan de l'orbite 11. Ainsi, il est possible par un allumage du propulseur 51 positionné du coté nord du plan de l'orbite 11 d'appliquer une poussée ayant une composante positive en Y. De même il est possible par un allumage du propulseur 51 positionné du coté sud du plan de l'orbite 11 d'appliquer une poussée ayant une composante négative en Y. Avantageusement, un unique système de propulsion 50 selon l'invention permet donc un contrôle d'orbite total, c'est-à-dire le contrôle des six paramètres orbitaux.

En fonction de diverses contraintes, d'intégration sur le satellite, de coût, ou encore de masse, diverses variantes du système de propulsion, notamment les trois variantes décrites ci-dessus, peuvent être envisagés selon l'invention.

Ces variantes du système de propulsion ont en commun un propulseur 51 apte à délivrer une force selon un axe F, et un mécanisme motorisé, 52a, 52b, ou 52c, relié d'une part au propulseur 51 et d'autre part à la structure 20 du satellite 10, ledit mécanisme motorisé, 52a, 52b ou 52c, étant apte à déplacer le propulseur 51 de part et d'autre du plan de l'orbite 11 et apte à orienter le propulseur 51 de manière à permettre de maitriser une composante perpendiculaire à l'orbite 11 de la force selon deux directions opposées, pour le contrôle d'inclinaison du satellite. Le mécanisme motorisé, 52a, 52b ou 52c est apte à déplacer le propulseur 51 selon un axe V parallèle à la vitesse du satellite 10, et apte à orienter le propulseur 51 de manière à permettre de maitriser :
- une composante de la force selon l'axe V, pour le contrôle d'orbite,
- une amplitude et une direction de couple dans un plan perpendiculaire à l'axe F, pour la maitrise du moment cinétique ;
le système de propulsion, 50a, 50b ou 50c ainsi configuré, permettant le contrôle de six paramètres orbitaux du satellite 10.

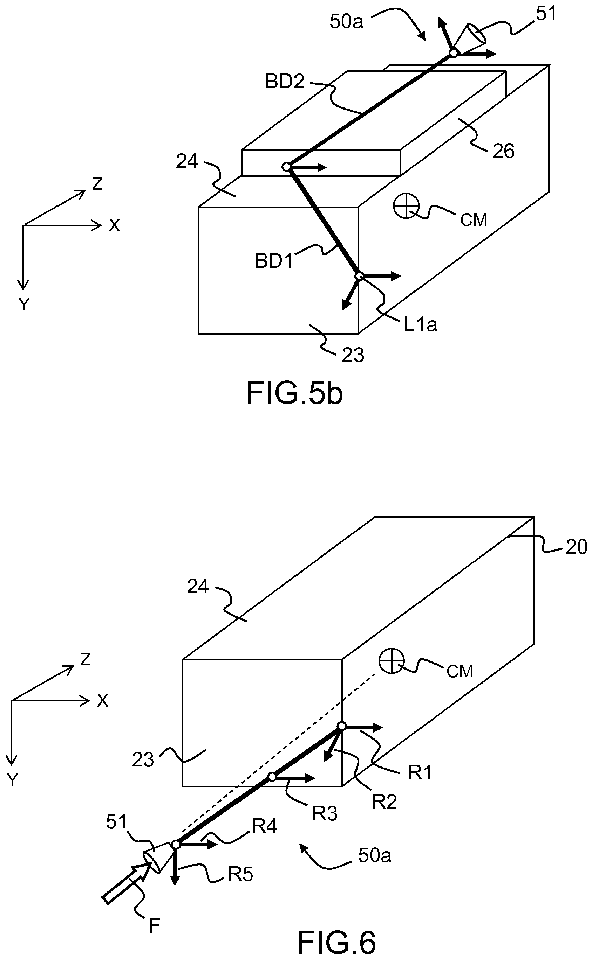

Les figures 5a et 5b représentent un système de propulsion en configuration de stockage selon deux modes de réalisation de l'invention. Le système de propulsion représenté sur les figures 5a et 5b correspond à la première variante de l'invention, c'est-à-dire qu'il est identique au système de propulsion 50a décrit sur la figure 4a. L'invention pourrait de la même manière s'appliquer à un système de propulsion 50b ou 50c pour les deux modes de réalisation de configuration de stockage décrit ci-après.

Lors d'une phase de lancement par un engin spatial lanceur, le système de propulsion 50a est, dans une configuration de stockage, apte à maintenir le propulseur 51 et le mécanisme motorisé 52a contre au moins une des faces de la structure 20 du satellite 10, pour le maintenir dans le volume limité par la coiffe du lanceur, et le protéger des fortes contraintes d'accélération et de vibration liées au lancement. Dans une phase opérationnelle ultérieure, le propulseur 51 et le mécanisme motorisé 52a sont libérés et positionnés en configuration opérationnelle, par exemple tel que représenté sur la figure 4a.

La figure **5a** représente un système de propulsion 50a en configuration de stockage selon un premier mode de réalisation. Dans le cas d'un satellite comprenant une structure parallélépipédique 20, le propulseur 51 et le mécanisme motorisé 52a sont maintenus, dans une configuration de stockage, contre au moins une des faces de la structure 20 du satellite 10. Le propulseur 51 et le mécanisme motorisé 52a sont libérés puis réorientés dans une configuration opérationnelle.

Avantageusement, la première liaison motorisée L1a est fixée à proximité du milieu d'une arrête de la structure 20, et le premier et second bras de déport, BD1 et BD2, sont maintenus en configuration de stockage contre une face de la structure 20 adjacente à cette arrête, par exemple la face anti-terre 23 sur la figure. Ce premier mode de réalisation permet avantageusement un stockage simple et peu encombrant du système de propulsion

La figure **5b** représente un système de propulsion 50a en configuration de stockage selon un second mode de réalisation. Dans le cas d'un satellite comprenant une structure parallélépipédique 20, le propulseur 51 et le mécanisme motorisé 52a sont maintenus, dans une configuration de stockage, contre au moins une des faces de la structure 20 du satellite 10. Le propulseur 51 et le mécanisme motorisé 52a sont libérés puis réorientés dans une configuration opérationnelle.

Avantageusement, la première liaison motorisée L1a est fixée à proximité du milieu d'une arrête de la structure 20. Le premier bras de déport BD1 est maintenu en configuration de stockage contre une première face de la structure 20 adjacente à cette arrête, par exemple la face anti-terre 23 sur la figure. Le second bras de déport BD2 et le propulseur 51 sont maintenus en configuration de stockage contre une seconde face de la structure 20, adjacente à la première face, par exemple la face nord 24 sur la figure.

Dans une architecture courante de satellite, les panneaux solaires 26 et 27 sont, en configuration de stockage, repliés et maintenus respectivement contre les faces nord 24 et sud 25. Sur la figure, le système de propulsion, fixé sur la face anti-terre 23, est maintenu en configuration de stockage d'une part contre la face anti-terre 23 pour le bras de déport BD1 et d'autre part contre la face nord 24 pour le bras de déport BD2 et le propulseur 51. Le système de propulsion étant configuré de sorte à intercaler, en configuration de stockage, les panneaux solaires 26 entre la face nord 24 de la structure 20 et le bras de déport BD2 du système de propulsion.

Ce second mode de réalisation améliore encore l'efficacité du contrôle d'inclinaison, en permettant le stockage d'un second bras de déport BD2 de grande dimension apte à positionner et orienter le propulseur de façon à délivrer une poussée sur le centre de masse CM dont la composante selon l'axe Y est très supérieure aux composantes selon les axes X et Z.

Divers dispositifs de maintien du système de propulsion en configuration de stockage sont envisagés selon l'invention ; en particulier des dispositifs pyrotechniques sont envisagés.

Avantageusement, le mécanisme motorisé, 52a, 52b, 52c, du système de propulsion 50a, 50b, 50c selon l'invention comprend des canalisations pour l'alimentation en carburant de la structure 20 du satellite 10 vers le propulseur 51, et/ou des moyens des moyens d'alimentation en énergie électrique vers le propulseur 51 et le mécanisme motorisé 52. Le propulseur 51 peut être de type chimique ou de type électrique. Pour un propulseur chimique, les canalisations transportent un carburant chimique de type ergol ou propergol ; pour un propulseur électrique, les canalisations transportent un carburant de type Xenon ou Krypton.

La figure 6 représente un système de propulsion dans une configuration adaptée au transfert d'orbite. Le système de propulsion représenté sur la figure 6 correspond à la première variante de l'invention, c'est-à-dire qu'il est identique au système de propulsion 50a décrit sur la figure 4a. L'invention pourrait s'appliquer de la même manière à un système de propulsion 50b ou 50c. Après libération du satellite de l'engin spatial lanceur sur une orbite de transfert, le système de propulsion selon l'invention est mis en oeuvre pour transporter le satellite jusqu'à son orbite finale.

Ainsi, dans une une configuration adaptée au transfert d'orbite, le système de propulsion 50a est, comme décrit sur la figure 6, positionné et orienté de manière à ce que la force délivrée par le propulseur 51 génère une poussée sur le satellite selon une direction voulue et un couple maitrisé. la génération de couple ayant pour but d'aider au contrôle d'attitude du satellite ou à la maitrise du moment cinétique du satellite. Par exemple, le propulseur est orienté de façon à délivrer une poussée parallèlement à l'axe Z et orienté vers le centre de masse CM.

Dans une mise en oeuvre particulière avantageuse de l'invention, on pourra se passer d'un propulseur principal de type à ergol pour le transfert d'orbite, comme dans les systèmes connu ; le transfert d'orbite étant entièrement assuré par le système de propulsion selon l'invention.

L'invention porte aussi sur un satellite à orbite terrestre, et plus particulièrement géostationnaire, muni d'un système de propulsion ayant les caractéristiques précédemment décrites. Elle porte notamment sur un satellite à structure parallélépipédique.

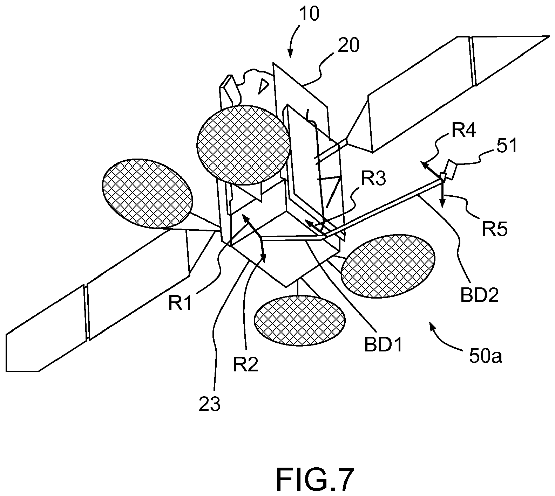

La figure 7 représente dans une vue en perspective un satellite muni de systèmes de propulsion selon l'invention dans une mise en oeuvre privilégiée de l'invention. Un système de propulsion 50a est fixé sur la face anti-terre 23 de la structure 20 d'un satellite 10. Le système de propulsion 50a est représenté en configuration opérationnelle déployée.

## Revendications

1. Système de propulsion pour le contrôle d'orbite d'un satellite (10) à orbite terrestre (11) disposant d'une capacité d'accumulation de moment cinétique, et pour la génération de couples contribuant à maitriser le moment cinétique, ledit satellite étant adapté à être animé d'une vitesse de déplacement tangentielle à l'orbite terrestre (11),
le système de propulsion (50a, 50b, 50c) comprenant un propulseur (51) apte à délivrer une force selon un axe F, et un mécanisme motorisé (52a, 52b, 52c) relié d'une part au propulseur (51) et d'autre part pouvant être relié à une structure (20) du satellite (10),
ledit mécanisme motorisé (52a, 52b, 52c) étant apte à déplacer le propulseur (51) de part et d'autre du plan de l'orbite (11) et apte à orienter le propulseur (51) de manière à permettre de maitriser une composante perpendiculaire à l'orbite (11) de la force selon deux directions opposées, pour le contrôle d'inclinaison du satellite,
ledit mécanisme motorisé (52a, 52b, 52c) est apte à orienter le propulseur (51) de manière à permettre de maitriser :
- une composante de la force selon un axe V parallèle à la vitesse du satellite (10), pour le contrôle d'orbite,
- une amplitude et une direction de couple dans un plan perpendiculaire à l'axe F, pour la maitrise du moment cinétique ;
le système de propulsion (50a, 50b, 50c) ainsi configuré permettant le contrôle de six paramètres orbitaux du satellite (10), caractérsé en ce que ledit mécanisme motorisé (52a, 52b, 52c) comprend plusieurs composants reliés entre eux, et pouvant être positionnés en série entre la structure (20) du satellite (10) et le propulseur (51), les composants étant positionnés en série dans l'ordre suivant :
- une première liaison motorisée (L1a), permettant une rotation autour d'un axe (R1) sensiblement parallèle à l'axe V, et une rotation autour d'un axe (R2) sensiblement perpendiculaire à la fois à l'axe V et à l'axe F,
- un premier bras de déport rigide (BD1),
- un seconde liaison motorisée (L2a), permettant une rotation autour d'un axe (R3) sensiblement parallèle à l'axe V,
- un second bras de déport (BD2),
- une troisième liaison motorisée (L3a), permettant une rotation autour d'un axe (R4) sensiblement parallèle à l'axe V, et une rotation autour d'un axe (R5) sensiblement perpendiculaire à l'axe F et à l'axe V.

2. Système de propulsion pour le contrôle d'orbite d'un satellite (10) à orbite terrestre (11) disposant d'une capacité d'accumulation de moment cinétique, et pour la génération de couples contribuant à maitriser le moment cinétique, ledit satellite étant adapté à être animé d'une vitesse de déplacement tangentielle à l'orbite terrestre (11),
le système de propulsion (50a, 50b, 50c) comprenant un propulseur (51) apte à délivrer une force selon un axe F, et un mécanisme motorisé (52a, 52b, 52c) relié d'une part au propulseur (51) et d'autre part pouvant être relié à une structure (20) du satellite (10),
ledit mécanisme motorisé (52a, 52b, 52c) étant apte à déplacer le propulseur (51) de part et d'autre du plan de l'orbite (11) et apte à orienter le propulseur (51) de manière à permettre de maitriser une composante perpendiculaire à l'orbite (11) de la force selon deux directions opposées, pour le contrôle d'inclinaison du satellite,
ledit mécanisme motorisé (52a, 52b, 52c) est apte à orienter le propulseur (51) de manière à permettre de maitriser :
- une composante de la force selon un axe V parallèle à la vitesse du satellite (10), pour le contrôle d'orbite,
- une amplitude et une direction de couple dans un plan perpendiculaire à l'axe F, pour la maitrise du moment cinétique ;
le système de propulsion (50a, 50b, 50c) ainsi configuré permettant le contrôle de six paramètres orbitaux du satellite (10), caractérsé en ce que ledit mécanisme motorisé (52a, 52b, 52c) comprend plusieurs composants reliés entre eux, et pouvant être positionnés en série entre la structure (20) du satellite (10) et le propulseur (51), les composants étant positionnés en série dans l'ordre suivant :
- une première liaison motorisée (L1b), permettant une rotation autour d'un axe (R1) sensiblement parallèle à l'axe V,
- un premier bras de déport rigide (BD1),
- un seconde liaison motorisée (L2b), permettant une rotation autour d'un axe (R3) sensiblement parallèle à l'axe V, et une rotation autour d'un axe (R2) sensiblement perpendiculaire à la fois à l'axe V et à l'axe F,
- un second bras de déport rigide (BD2),
- une troisième liaison motorisée (L3b), permettant une rotation autour d'un axe (R4) sensiblement parallèle à l'axe V, et une rotation autour d'un axe (R5) sensiblement perpendiculaire à l'axe F et à l'axe V.

3. Système de propulsion selon l'une des revendications 1 à 2, **caractérisé en ce que** la troisième liaison motorisée (L3 ; L3b) est reliée au propulseur (51) par l'intermédiaire d'un troisième bras de déport rigide (BD3).

4. Système de propulsion selon l'une des revendications précédentes, **caractérisé en ce que** le mécanisme motorisé (52a ; 52b ; 52c) comprend des moyens d'alimentation en énergie de la structure (20) du satellite (10) vers le propulseur (51) et/ou le mécanisme motorisé (52a ; 52b ; 52c).

5. Satellite à orbite terrestre muni d'un système de propulsion selon l'une des revendications 1 à 4, **caractérisé en ce qu'**il comprend une structure du satellite, le mécanisme motorisé étant relié à la structure du satellite, les plusieurs composants reliés entre eux étant disposés en série entre la structure du satellite et le propulseur.

6. Satellite à orbite terrestre selon la revendication 5, **caractérisé en ce qu'**il comprend une structure parallélépipédique (20), et **en ce que** le propulseur (51) et le mécanisme motorisé (52a ; 52b ; 52c) sont maintenus, dans une configuration de stockage, contre une des faces de la structure (20) du satellite (10); le propulseur (51) et le mécanisme motorisé (52a ; 52b ; 52c) étant libérés puis réorientés dans une configuration opérationnelle.

7. Satellite à orbite terrestre selon la revendication 6, **caractérisé en ce que** la première liaison motorisée (L1a ; L1b) est fixée à proximité du milieu d'une arrête de la structure (20), et **en ce que** le premier et second bras de déport (BD1, BD2) sont maintenus en configuration de stockage contre une face de la structure (20) adjacente à cette arrête.

8. Satellite à orbite terrestre selon la revendication 7, **caractérisé en ce que** la première liaison motorisée (L1a ; L1b) est fixée à proximité du milieu d'une arrête de la structure (20), et **en ce que** le premier bras de déport (BD1) est maintenu en configuration de stockage contre une première face de la structure (20), adjacente à cette arrête, et **en ce que** le second bras de déport (BD2) et le propulseur (51) sont maintenus en configuration de stockage contre une seconde face de la structure (20), adjacente à la première face.

9. Satellite à orbite terrestre muni d'un système de propulsion selon l'une des revendications 1 à 4, **caractérisé en ce que** le système de propulsion (50a, 50b, 50c) est, dans une une configuration adaptée au transfert d'orbite, positionné et orienté de manière à ce que la force délivrée par le propulseur (51) génère une poussée orientée vers un centre de masse (CM) du satellite ; la génération de couple ayant pour but d'aider au contrôle d'attitude du satellite ou à la maitrise du moment cinétique du satellite.

## Patentansprüche

1. Antriebssystem zur Steuerung der Umlaufbahn eines Satelliten (10) mit Erdumlaufbahn (11), welches über eine Akkumulationskapazität des kinetischen Moments verfügt, und zur Erzeugung von Momenten, welche zur Lenkung des kinetischen Momentes beitragen, wobei der Satellit geeignet ist, mit einer zur Erdumlaufbahn tangentialen (11) Geschwindigkeit bewegt zu werden,
wobei das Antriebssystem (50a, 50b, 50c) eine Antriebsvorrichtung (51) besitzt, welche in der Lage ist, eine Kraft entlang einer Achse F abzugeben, und einen motorisierten Mechanismus (52a, 52b, 52c), welcher einerseits mit der Antriebsvorrichtung (51) verbunden ist und andererseits mit einer Struktur (20) des Satelliten (10) verbunden werden kann,
wobei der motorisierte Mechanismus (52a, 52b, 52c) in der Lage ist, die Antriebsvorrichtung (51) beiderseits der Umlaufbahnebene (11) zu verschieben und in der Lage ist, die Antriebsvorrichtung (51) so auszurichten, dass es ermöglicht wird, eine zur Erdumlaufbahn rechtwinklige Komponente (11) der Kraft entlang zwei entgegengesetzten Richtungen zum Steuern der Neigung des Satelliten zu lenken,
wobei der motorisierte Mechanismus (52a, 52b, 52c) in der Lage ist, die Antriebsvorrichtung (51) so auszurichten, das die Lenkung folgender Elemente ermöglicht wird:
- einer Komponente der Kraft entlang einer Achse V, welche parallel zur Geschwindigkeit des Satelliten (10) ist, zur Steuerung der Umlaufbahn,
- einer Amplitude und einer Momentrichtung in einer rechtwinklig zur Achse F gelegenen Ebene, zur Lenkung des kinetischen Momentes;
wobei das so konfigurierte Antriebssystem (50a, 50b, 50c) es ermöglicht, sechs Umlaufbahnparameter des Satelliten (10) zu steuern, **dadurch gekennzeichnet, dass** der motorisierte Mechanismus (52a, 52b, 52c) mehrere miteinander verbundene Komponenten beinhaltet und welche in Reihe zwischen der Struktur (20) des Satelliten (10) und der Antriebsvorrichtung (51) positioniert sein können, wobei die Komponenten in Reihe in folgender Reihenfolge positioniert sind:
- eine erste motorisierte Verbindung (L1a), welche eine Drehung um eine Achse (R1) ermöglicht, welche im Wesentlichen parallel zur Achse V ist, und eine Drehung um eine Achse (R2), welche im Wesentlichen rechtwinklig zur Achse V und zur Achse F gleichermaßen ist,
- ein erster starrer Auslegerarm (BD1),
- eine zweite motorisierte Verbindung (L2a), welche eine Drehung um eine Achse (R3) ermöglicht, welche im Wesentlichen parallel zur Achse V ist,
- ein zweiter Auslegerarm (BD2),
- eine dritte motorisierte Verbindung (L3a), welche eine Drehung um eine Achse (R4) ermöglicht, welche im Wesentlichen parallel zur Achse V ist, und eine Drehung um eine Achse (R5), welche im Wesentlichen rechtwinklig zur Achse F und zur Achse V gleichermaßen ist.

2. Antriebssystem zur Steuerung der Umlaufbahn eines Satelliten (10) mit Erdumlaufbahn (11), welches über eine Akkumulationskapazität des kinetischen Moments verfügt, und zur Erzeugung von Momenten, welche zur Lenkung des kinetischen Momentes beitragen, wobei der Satellit geeignet ist, mit einer zur Erdumlaufbahn tangentialen (11) Bewegung bewegt zu werden,
wobei das Antriebssystem (50a, 50b, 50c) eine Antriebsvorrichtung (51) besitzt, welche in der Lage ist, eine Kraft entlang einer Achse F abzugeben, und einen motorisierten Mechanismus (52a, 52b, 52c), welcher einerseits mit der Antriebsvorrichtung (51) verbunden ist und andererseits mit einer Struktur (20) des Satelliten (10) verbunden werden kann,
wobei der motorisierte Mechanismus (52a, 52b, 52c) in der Lage ist, die Antriebsvorrichtung (51) beiderseits der Umlaufbahnebene (11) zu verschieben und in der Lage ist, die Antriebsvorrichtung (51) so auszurichten, dass es ermöglicht wird, eine zur Erdumlaufbahn rechtwinklige Komponente (11) der Kraft entlang zwei entgegengesetzten Richtungen zum Steuern der Neigung des Satelliten zu lenken,
wobei der motorisierte Mechanismus (52a, 52b, 52c) in der Lage ist, die Antriebsvorrichtung (51) so auszurichten, das die Lenkung folgender Elemente ermöglicht wird:
- einer Komponente der Kraft entlang einer Achse V, welche parallel zur Geschwindigkeit des Satelliten (10) ist, zur Steuerung der Umlaufbahn,
- einer Amplitude und einer Momentrichtung in einer rechtwinklig zur Achse F gelegenen Ebene, zur Lenkung des kinetischen Momentes;
wobei das so konfigurierte Antriebssystem (50a, 50b, 50c) es ermöglicht, sechs Umlaufbahnparameter des Satelliten (10) zu steuern, **dadurch gekennzeichnet, dass** der motorisierte Mechanismus (52a, 52b, 52c) mehrere miteinander verbundene Komponenten beinhaltet und welche in Reihe zwischen der Struktur (20) des Satelliten (10) und der Antriebsvorrichtung (51) positioniert sein können, wobei die Komponenten in Reihe in folgender Reihenfolge positioniert sind:
- eine erste motorisierte Verbindung (L1b), welche eine Drehung um eine Achse (R1) ermöglicht, welche im Wesentlichen parallel zur Achse V ist,
- ein erster starrer Auslegerarm (BD1),
- eine zweite motorisierte Verbindung (L2b), welche eine Drehung um eine Achse (R3) ermöglicht, welche im Wesentlichen parallel zur Achse V ist, und eine Drehung um eine Achse (R2), welche im Wesentlichen rechtwinklig zur Achse V und zur Achse F gleichermaßen ist,
- ein zweiter starrer Auslegerarm (BD2),
- eine dritte motorisierte Verbindung (L3b), welche eine Drehung um eine Achse (R4) ermöglicht, welche im Wesentlichen parallel zur Achse V ist, und eine Drehung um eine Achse (R5), welche im Wesentlichen rechtwinklig zur Achse F und zur Achse V ist,

3. Antriebssystem nach einem der Ansprüche 1 bis 2, **dadurch gekennzeichnet, dass** die dritte motorisierte Verbindung (L3; L3b) mit der Antriebsvorrichtung (51) in Vermittlung eines dritten starren Auslegerarms (BD3) verbunden ist.

4. Antriebssystem nach einem der vorhergehenden Ansprüche, **dadurch gekennzeichnet, dass** die motorisierte Verbindung (52a; 52b; 52c) Energieversorgungsmittel von der Struktur (20) des Satelliten (10) zur Antriebsvorrichtung (51) und/oder zum motorisierten Mechanismus (52a; 52b; 52c) beinhaltet.

5. Satellit mit Erdumlaufbahn, welcher mit einem Antriebssystem nach einem der Ansprüche 1 bis 4 versehen ist, **dadurch gekennzeichnet, dass** er eine Struktur des Satelliten beinhaltet, wobei der motorisierte Mechanismus mit einer Struktur des Satelliten verbunden ist, wobei die mehreren, miteinander verbundenen Komponenten in Reihe zwischen der Struktur des Satelliten und dem Antriebssystem angeordnet sind.

6. Satellit mit Erdumlaufbahn nach Anspruch 5, **dadurch gekennzeichnet, dass** er eine parallelipedförmige Struktur (20) beinhaltet und dadurch, dass die Antriebsvorrichtung (51) und der motorisierte Mechanismus (52a; 52b; 52c) in einer Lagerungskonfiguration an einer der Seiten der Struktur (20) des Satelliten (10) gehalten werden; wobei die Antriebsvorrichtung (51) und der motorisierte Mechanismus (52a; 52b; 52c) freigegeben und dann in eine Betriebskonfiguration neu ausgerichtet werden.

7. Satellit mit Erdumlaufbahn nach Anspruch 6, **dadurch gekennzeichnet, dass** die erste motorisierte Verbindung (L1a; L1b) in der Nähe der Mitte einer Kante der Struktur (20) befestigt ist, und dadurch, dass der erste und der zweite Auslegerarm (BD1, BD2) in Lagerungskonfiguration an einer Seite der Struktur (20), welche an diese Kante angrenzt, gehalten werden.

8. Satellit mit Erdumlaufbahn nach Anspruch 7, **dadurch gekennzeichnet, dass** die erste motorisierte Verbindung (L1a; L1b) in der Nähe der Mitte einer Kante der Struktur (20) befestigt ist, und dadurch, dass der erste Auslegerarm (BD1) in Lagerungskonfiguration an einer ersten Seite der Struktur (20), welche an diese Kante angrenzt, gehalten wird, und dass der zweite Auslegerarm (BD2) und die Antriebsvorrichtung (51) in Lagerungskonfiguration an einer zweiten Seite der Struktur (20), welche an die erste Seite angrenzt, gehalten werden.

9. Satellit mit Erdumlaufbahn, welcher mit einem Antriebssystem nach einem der Ansprüche 1 bis 4 versehen ist, **dadurch gekennzeichnet, dass** das Antriebssystem (50a, 50b, 50c) in einer zum Umlaufbahntransfer geeigneten Konfiguration so positioniert und ausgerichtet ist, dass die von der Antriebsvorrichtung (51) abgegebene Kraft einen in Richtung eines Gewichtsmittelpunktes (CM) des Satelliten orientierten Schub erzeugt; wobei die Erzeugung des Momentes dazu dient, bei der Steuerung der Fluglage des Satelliten oder der Lenkung des kinetischen Momentes des Satelliten zu helfen.

## Claims

1. Propulsion system for controlling the orbit of a satellite (10) in earth orbit (11) that has a kinetic moment accumulation capacity, and for the generation of torques helping to control the kinetic moment, said satellite being suitable to be driven by a displacement velocity tangential to the earth orbit (11),
the propulsion system (50a, 50b, 50c) comprising a thruster (51), suitable for delivering a force along an axis F, and a motor-driven mechanism (52a, 52b, 52c), that is linked on the one hand to the thruster (51) and that is on the other hand suitable for being linked to a structure (20) of the satellite (10),
said motor-driven mechanism (52a, 52b, 52c) being suitable for displacing the thruster (51) on either side of the plane of the orbit (11) and being suitable for orienting the thruster (51) so as to make it possible to control a component perpendicular to the orbit (11) of the force in two opposite directions, to control the inclination of the satellite,
said motor-driven mechanism (52a, 52b, 52c) being suitable for orienting the thruster (51) so as to make it possible to control:
- a component of the force on the axis V parallel to the velocity of the satellite (10), to control the orbit,
- an amplitude and a direction of torque in a plane perpendicular to the axis F, to control the kinetic moment;
the thus configured propulsion system (50a, 50b, 50c) making it possible to control six orbital parameters of the satellite (10), **characterized in that** the motor-driven mechanism (52a, 52b, 52c) comprises a plurality of components linked together, and is suitable for being positioned in series between the structure (20) of the satellite (10) and the thruster (51), the components being positioned in the following order:
- a first motor-driven link (L1a), allowing a rotation about an axis (R1) substantially parallel to the axis V, and a rotation about an axis (R2) substantially perpendicular both to the axis V and to the axis F,
- a first rigid offset arm (BD1),
- a second motor-driven link (L2a), allowing a rotation about an axis (R3) substantially parallel to the axis V,
- a second offset arm (BD2),
- a third motor-driven link (L3a), allowing a rotation about an axis (R4) substantially parallel to the axis V, and a rotation about an axis (R5) substantially perpendicular to the axis F and to the axis V.

2. Propulsion system for controlling the orbit of a satellite (10) in earth orbit (11) that has a kinetic moment accumulation capacity, and for the generation of torques helping to control the kinetic moment, said satellite being suitable to be driven by a displacement velocity tangential to the earth orbit (11),
the propulsion system (50a, 50b, 50c) comprising a thruster (51) suitable for delivering a force along an axis F, and a motor-driven mechanism (52a, 52b, 52c), that is on the one hand linked to the thruster (51) and that is on the other hand able to be linked to a structure (20) of the satellite (10),
said motor-driven mechanism (52a, 52b, 52c) being suitable for displacing the thruster (51) on either side of the plane of the orbit (11) and being suitable for orienting the thruster (51) so as to make it possible to control a component perpendicular to the orbit (11) of the force in two opposite directions, to control the inclination of the satellite,
said motor-driven mechanism (52a, 52b, 52c) being suitable for orienting the thruster (51) so as to make it possible to control:
- a component of the force on the axis V parallel to the velocity of the satellite (10), to control the orbit,
- an amplitude and a direction of torque in a plane perpendicular to the axis F, to control the kinetic moment;
- the thus configured propulsion system (50a, 50b, 50c) making it possible to control six orbital parameters of the satellite (10), **characterized in that** the motor-driven mechanism (52a, 52b, 52c) comprises a plurality of components that are linked together, and suitable for being positioned in series between the structure (20) of the satellite (10) and the thruster (51), the components being positioned in the following order:
- a first motor-driven link (L1b), allowing a rotation about an axis (R1) substantially parallel to the axis V,
- a first rigid offset arm (BD1),
- a second motor-driven link (L2b), allowing a rotation about an axis (R3) substantially parallel to the axis V, and a rotation about an axis (R2) substantially perpendicular to both the axis V and the axis F,
- a second rigid offset arm (BD2),
- a third motor-driven link (L3b), allowing a rotation about an axis (R4) substantially parallel to the axis V, and a rotation about an axis (R5) substantially perpendicular to the axis F and to the axis V.

3. Propulsion system according to one of Claims 1 to 2, **characterized in that** the third motor-driven link (L3; L3b) is linked to the thruster (51) via a third rigid offset arm (BD3).

4. Propulsion system according to one the preceding claims, **characterized in that** the motor-driven mechanism (52a; 52b; 52c) comprises means for supplying energy from the structure (20) of the satellite (10) to the thruster (51) and/or to the motor-driven mechanism (52a; 52b; 52c).

5. Satellite in an earth orbit, provided with a propulsion system according to Claims 1 to 4, **characterized in that** it comprises a satellite structure, the motor-driven mechanism being linked to the satellite structure, the plurality of components linked together being positioned in series between the satellite structure and the thruster.

6. Satellite in an earth orbit according to Claim 5, **characterized in that** it comprises a parallelepipedal structure (20), and **in that** the thruster (51) and the motor-driven mechanism (52a; 52b; 52c) are held, in a storage configuration, against one of the faces of the structure (20) of the satellite (10); the thruster (51) and the motor-driven mechanism (52a; 52b; 52c) being released then reoriented in an operational configuration.

7. Satellite in earth orbit according to Claim 6, **characterized in that** the first motor-driven link (L1a; L1b) is fastened close to the middle of an edge of the structure (20), and **in that** the first and second offset arms (BD1, BD2) are held in storage configuration against a face of the structure (20) adjacent to this edge.

8. Satellite in earth orbit according to Claim 7, **characterized in that** the first motor-driven link (L1a; L1b) is fastened close to the middle of an edge of the structure (20), and **in that** the first offset arm (BD1) is held in storage configuration against a first face of the structure (20), adjacent to this edge, and **in that** the second offset arm (BD2) and the thruster (51) are held in storage configuration against a second face of the structure (20), adjacent to the first face.

9. Satellite in earth orbit, provided with a propulsion system according to one of Claims 1 to 4, **characterized in that** the propulsion system (50a, 50b, 50c) is, in a configuration suited to orbit transfer, positioned and oriented in such a way that the force delivered by the thruster (51) generates a thrust oriented to a mass centre (MC) on the satellite; the purpose of the torque generation being to assist in controlling the attitude of the satellite or in controlling the kinetic moment of the satellite.
